# EUROPÄISCHE PATENTSCHRIFT

(11) **EP 0 543 850 B1**
(45) Veröffentlichungstag und Bekanntmachung des Hinweises auf die Patenterteilung: **13.12.1995**
(21) Anmeldenummer: 91914144.0
(22) Anmeldetag: 07.08.1991
(51) Int. Cl.: C07F 9/30, C07F 9/38

(54) **HERSTELLUNG VON ACYLAMINOMETHANPHOSPHONSÄUREN UND ACYLAMINOMETHANPHOSPHINSÄUREN**
PREPARATION OF ACYLAMINOMETHANEPHOSPHONIC ACIDS AND ACYLAMINOMETHANEPHOSPHINIC ACIDS
PRODUCTION D'ACIDES PHOSPHONIQUES D'ACYLAMINOMETHANE ET D'ACIDES PHOSPHINIQUES D'ACYLAMINOMETHANE

(30) Priorität: 17.08.1990 DE 4026026
(43) Veröffentlichungstag der Anmeldung: 02.06.1993
(73) Patentinhaber: Hoechst Schering AgrEvo GmbH, 13509 Berlin (DE)
(72) Erfinder: KLEINER, Hans-Jerg, D-6242 Kronberg (DE)
(86) Internationale Anmeldenummer: EP9101495
(87) Internationale Veröffentlichungsnummer: WO9203450

(56) Entgegenhaltungen:
- EP-A- 0 370 992
- DE-A- 3 824 961
- Chemical Abstracts, vol. 107, no.5, 3 August 1987, Columbus, Ohio, US; abstract No. 39933, Pulwer M J :"a convenient synthesis of aminomethylphosphonic acid"
- Synthesis No.7, 1989, Stuttgart, DE, pages 547-548; Soroka M :"comments on the synthesis of aminomethylphosphonic acid"
- Liebigs Annalen der Chemie, vol.1988, No.9, 1988, Weinheim, DE, pages 861-867; Natchev I A :"herbicidal activity of phosphoryl analogues of glycine" see page 862, LH column, see page 865, RH column, line 6-16

## Beschreibung

Acylaminomethanphosphonsäuren sind wertvolle Zwischenprodukte zur Herstellung von Aminomethanphosphonsäure, die technisches Interesse besitzt. Insbesondere sind sie auch geeignet als Zwischenprodukte zur Herstellung des herbizid wirkenden N-Phosphonomethylglycins durch Umsetzung mit Glyoxylsäure (siehe US-A-4851159). Bisher sind die Acylaminomethanphosphonsäuren beispielsweise durch Umsetzung von N-Hydroxymethylamiden mit Phosphortrichlorid und anschließender Hydrolyse mit Salzsäure erhältlich (US-A-2304156; US-A-2328358). Ein besonderer Nachteil dieses Verfahrens besteht in der Bildung von Bischlormethylether als unerwünschtem Nebenprodukt, das als krebserzeugender Arbeitsstoff ausgewiesen ist. Bischlormethylether entsteht durch Umsetzung von Formaldehyd und Salzsäure im Hydrolyseschritt, wobei der Formaldehyd herstellungsbedingt in Spuren in den N-Hydroxymethylamiden enthalten ist. Die restlose Entfernung von Bischlormethylether erfordert aufwendige Reinigungsschritte. Es besteht somit die Aufgabe, ein Verfahren bereitzustellen, das die Bildung von Bischlormethylether ausschließt und industriell anwendbar ist.

Aus Liebigs Annalen der Chemie, Nr. 9, 1988. Seiten 861-867 ist bereits bekannt, (N-Acetyiaminomethyl)-(methyl)-phosphinsäure bzw. N-Acetyiamino-methanphosphonsäure aus 1,3,5- Triacetyl-hexahydro-1,3,5-triazin und Methanphosphonigsäure bzw. phosphoriger Säure herzustellen und anschließend zu (Aminomethyl)-(methyl)-phosphinsäure bzw.

Amino-methanphosphonsäure zu deacetylieren. Das für die erstgenannte Umsetzung benötigte 1,3,5- Triacetyl-hexahydro-1,3,5-triazin ist nach Synthesis 1989, Seiten 547-548 durch Reaktion von Formaldehyd mit Nitrilen zugänglich.

Gegenstand der Erfindung ist ein Verfahren zur Herstellung von Verbindungen der Formel I, 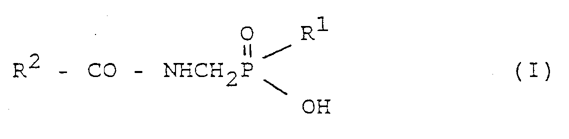
worin R¹ Hydroxy, C₁-C₄-Alkyl oder Phenyl und R² H, C₁-C₆-Alkyl, vorzugsweise C₁-C₃-Alkyl, Benzyl oder Phenyl, das unsubstituiert oder durch ein oder mehrere Reste aus der Gruppe C₁-C₄-Alkyl, C₁-C₄-Alkoxy und Halogen substituiert ist, bedeuten, dadurch gekennzeichnet, daß man Verbindungen der Formel II,

R² - CO - NH - CH₂ - OH (II)

worin R² die obengenannte Bedeutung hat, mit Verbindungen der Formel III, 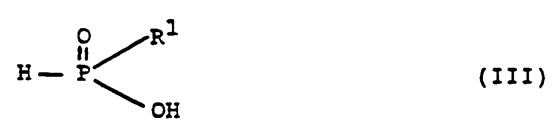
worin R¹ die obengenannte Bedeutung hat, in Gegenwart von mindestens äquimolarer Menge an Essigsäureanhydrid, bezogen auf die Verbindung der Formel II, umsetzt.

Gegenstand der Erfindung sind ferner Acylaminomethylphosphinsäuren der genannten Formel I, worin R¹ Phenyl bedeutet und R² die oben angegebenen Bedeutungen hat. Die Verbindungen sind wertvolle Zwischenprodukte zur Herstellung von Aminomethylphosphinsäuren, die biologische Aktivität aufweisen (S. L. Maier in "Advances in the Chemistry of Aminophosphonic Acids" in "Phosphorus and Sulfur" 14, 195-322 (1983) und dort Zit. Lit). Bevorzugt sind die Acylaminomethylphosphinsäuren der Formel I, in denen R² die obengenannten bevorzugten Bedeutungen hat.

Als Ausgangsverbindungen für das erfindungsgemäße Verfahren kommen beispielsweise in Frage: N-Hydroxymethylformamid, N-Hydroxymethylacetamid und insbesondere N-Hydroxymethylbenzamid. Säuren der allgemeinen Formel III sind beispielsweise phosphorige Säure, Methanphosphonigsäure und
Benzolphosphonigsäure. Die Verbindungen der Formeln II und III sind allgemein bekannt und im Handel erhältlich oder nach bekannten Verfahren leicht zugänglich.

Von besonderer Bedeutung für die Höhe der Ausbeute ist das Molverhältnis der Komponenten zueinander. Die Ausgangsstoffe N-Hydroxymethylamid der allgemeinen Formel II, Säure der allgemeinen Formel III und Essigsäureanhydrid werden bevorzugt im Molverhältnis von 1:1:1,5 bis 1:(1-1,1):8, insbesondere im Molverhältnis von 1:1:1,5 bis 1:1:4, eingesetzt. Weitere Überschüsse an Essigsäureanhydrid sind möglich.

Die Umsetzung von II und III kann gegebenenfalls in einem organischen Lösungemittel erfolgen.

Als Lösungsmittel kommen z.B. polare protische und aprotische organische Lösungsmittel, wie Essigsäure, Acetonitril, Tetrahydrofuran oder Dioxan in Frage. Bevorzugtes Lösungsmittel ist Essigsäure. Es kann auch auf die Verwendung von Lösungsmitteln verzichtet werden.

Das Verfahren wird zweckmäßig beispielsweise so durchgeführt, daß die Reaktionskomponenten der Formeln II und III und Essigsäureanhydrid im Temperaturbereich 5 bis 60°C gegebenenfalls unter Kühlung gemischt werden. Dabei ist die Reihenfolge der Zugabe der Komponenten nicht kritisch. Beispielsweise kann man zu dem Essigsäureanhydrid die Lösung der Säure der allgemeinen Formel III in dem organischen Lösungsmittel wie Essigsäure zudosieren und dann zu dieser Mischung das gegebenenfalls in Lösungsmittel gelöste N-Hydroxymethylamid der allgemeinen Formel II portionsweise oder kontinuierlich zugeben. Nach beendeter Mischung wird gegebenenfalls noch nachgerührt, z.B. im Temperaturbereich 10 bis 60 °C, und dann vorzugsweise zum Rückfluß erhitzt. Nach beendeter Umsetzung kann es sinnvoll sein, die im Reaktionsgemisch enthaltende Menge an überschüssigem Essigsäureanhydrid zunächst durch Wasserzugabe und weiteres Erhitzen zu hydrolysieren. Danach wird vorzugsweise das bei den vorherigen Umsetzungen gegebenenfalls zugesetzte organische Lösungsmittel entfernt, beispielsweise durch Destillation, gegebenenfalls unter reduzierten Druck. Das Reaktionsgut kann aber beispielsweise auch in kristallisierter Form vom organischen Lösungsmittel durch Absaugen getrennt werden.

Das Verfahren wird vorzugsweise so durchgeführt, daß Essigsäureanhydrid und die Reaktionskomponenten der Formeln II und III bei Temperaturen von 5 bis 60 °C gegebenenfalls unter Kühlung gemischt werden und dann bis zur vollständigen Umsetzung im Rückfluß erhitzt werden.

Die Aufarbeitung kann nach allgemein üblichen Methoden erfolgen. Beispielsweise ist es möglich, zunächst Leichtsieder im Vakuum destillativ abzutrennen. Die anfallenden Rückstände können dann gegebenenfalls unter Erwärmen mit Wasser oder anderen Lösungsmitteln wie z.B. Aceton, Acetonitril, Essigsäure, Methanol, Äthanol oder Isopropanol digeriert werden. Das anfallende kristalline Produkt wird dann abgetrennt und kann nach üblichen Methoden weiter gereinigt werden. Es kann außerdem vorteilhaft sein, die in der Reaktionsmischung enthaltene Menge an überschüssigem Essigsäureanhydrid vor der weiteren Aufarbeitung zu hydrolysieren. Bei Verwendung von N-Hydroxymethylbenzamid fallen die Endprodukte dann zum Teil bereits beim Abkühlen kristallin an.

Die Rohprodukte können in einfacher Weise durch Kristallisation weiter gereinigt werden. Es ist eine Besonderheit des Verfahrens, daß die anfallenden Endprodukte der Formel (I), wenn R² nicht Methyl ist, Anteile an Verbindungen der Formel (I), worin R² Methyl bedeutet, als Nebenprodukt enthalten können. Für die Weiterverarbeitung der Endprodukte entsprechend dem Verfahren nach US-A-4851159 sind diese Anteile an Nebenprodukt gleich wertvoll wie die Hauptbestandteile des erfindungsgemäßen Verfahrens. Gewünschtenfalls können die Nebenprodukte nach üblichen Trennverfahren abgetrennt werden.

### Beispiel 1

302 g (2,0 Mol) N-Hydroxymethylbenzamid wurden in 200 ml Essigsäure gegeben und auf 10 °C gekühlt. Dann ließ man eine Lösung von 164 g (2,0 Mol) phosphoriger Säure in 200 ml Essigsäure in 15 Minuten bei derselben Temperatur unter Rühren und Kühlung zutropfen. Gegen Ende des Zutropfens entstand eine fast klare Lösung. Nun ließ man 521 g (5,11 Mol) Essigsäureanhydrid schnell zutropfen, wobei die Temperatur unter Kühlung 53 °C nicht überschritt. Dann wurde 2,5 Stunden am Rückfluß gehalten. Nach Abkühlung auf Raumtemperatur wurden unter Kühlung 56 g (3,1 Mol) Wasser zugegeben. Anschließend wurde 30 Minuten am Rückfluß gehalten. Unter reduziertem Druck wurden anschließend etwa 110 ml Essigsäure abdestilliert und die verbleibende Reaktionslösung über Nacht gerührt und anschließend abgesaugt. Man erhielt 340 g (ca. 80 % d.Th.) eines kristallinen Gemisches von ca. 70 % Benzoylaminomethanphosphonsäure, ca. 20 % Acetylaminomethanphosphonsäure und weiteren Phosphonsäuren (nach ³¹P-NMR-Spektrum). Das Gemisch hatte einen Schmelzpunkt von 156 bis 163 °C. Nach Umkristallisation aus Wasser wurde reine Benzoylaminomethanphosphonsäure mit einem Schmelzpunkt von 176-177 °C gewonnen.

### Beispiel 2

561 g (5,5 Mol) Essigsäureanhydrid wurden auf 10 °C gekühlt. Nun ließ man während einer Stunde unter Rühren und Kühlen eine Lösung aus 164 g (2,0 Mol) phosphoriger Säure und 300 ml Essigsäure zutropfen. Dann wurden 302 g (2,0 Mol) N-Hydroxymethylbenzamid portionsweise in 50 Minuten bei 10-15 °C unter Kühlung eingetragen. 20 Minuten wurde bei 10 °C nachgerührt. Das Reaktionsgemisch wurde anschließend 2,5 Stunden am Rückfluß gehalten und dann abgekühlt. Nun Ließ man 61 g (3,39 Mol) Wasser bei 25-30 °C unter Kühlung und Rühren zutropfen. Dann wurde erneut am Rückfluß gehalten. Nach dem Abkühlen wurde über Nacht gerührt und dann abgesaugt. Man erhielt 320 g (ca. 75 % d.Th.) rohe Benzoylaminomethanphosphonsäure. Aus der Mutterlauge konnte weitere Rohsäure gewonnen werden.

### Beispiel 3

43,3 g (0,424 Mol) Essigsäureanhydrid wurde auf 10 °C gekühlt. Nun wurde eine Lösung von 16 g (0,2 Mol) Methanphosphonigsäure in 40 ml Essigsäure unter Rühren und Kühlung zugetropft. Anschließend wurden 30,2 g (0,2 Mol) N-Hydroxymethylbenzamid in zehn Minuten portionsweise unter Kühlung zugegeben. Dann ließ man die Kühlung weg, wobei die Innentemperatur bis auf 32 °C stieg. Dann wurde 2,5 Stunden zum Rückfluß erhitzt und danach abgekühlt. Anschließend wurde unter reduziertem Druck bis zu einer Innentemperatur von 95 °C eingeengt. Als Rückstand verblieben 46,7 g Rohprodukt. Diese wurden in Wasser in der Hitze gelöst und heiß abgesaugt. Das Filtrat wurde unter reduziertem Druck wieder bis 95 °C eingeengt. Man erhielt 38,3 g eines kristallinen Rückstandes. Nach Umkristallisation aus Wasser erhielt man 24 g (56 % d.Th.) (Benzoylaminomethyl)-(methyl)-phosphinsäure mit einem Schmelzpunkt von 144 bis 146 °C; die CHNP-Analyse einer Probe ergab:

| | | | | | |
|---|---|---|---|---|---|
| C₉H₁₂NO₃ P (213) | ber.: | 50,70 % C | 5,67 % H | 6,57 % N | 14,53 % P |
| | gef.: | 51,2 % C | 5,8 % H | 6,5 % N | 14,2 % P |

### Beispiel 4

43,2 g (0,424 Mol) Essigsäureanhydrid wurden auf 10 °C gekühlt. Nun wurde eine Lösung von 28,2 g (0,2 Mol) Benzolphosphonigsäure in 40 ml Essigsäure bei 15 °C unter Rühren und Kühlung zugetropft. Dann wurden 30,2 g (0,2 Mol) N-Hydroxymethylbenzamid bei 15 °C unter Kühlung portionsweise während 10 Minuten zugegeben. Dann ließ man die Kühlung weg, wobei die Innentemperatur auf 35 °C anstieg. Dann wurde 3 Stunden am Rückfluß erhitzt und anschließend abgekühlt. Nun wurden 175 ml Wasser zugesetzt; dabei stieg die Temperatur auf 35 °C. Es wurde erneut zum Rückfluß erhitzt und schließlich erneut unter Rühren abgekühlt. Nach Kristallisation erhielt man insgesamt 40 g (73 % d.Th.) Benzoylaminomethyl-phenyl-phosphinsäure mit einem Schmelzpunkt von 158-160 °C. Die CHNP-Analyse ergab:

| | | | | | |
|---|---|---|---|---|---|
| C₁₄H₁₄NO₃P (275) | ber.: | 61,09 % C | 5,13 % H | 5,09 % N | 11,25 % P |
| | gef.: | 61,2 % C | 5,2 % H | 5,3 % N | 10,7 % P |

### Beispiel 5

40,8 g (0,4 Mol) Essigsäureanhydrid wurden auf 10 °C gekühlt. Dann wurden unter Rühren und Kühlen 16,4 g (0,2 Mol) phosphorige Säure während 5 Minuten eingetragen. Anschließend wurden 17,8 g (0,2 Mol) N-Hydroxymethylacetamid bei 10 °C in 10 Minuten eingetropft. Dann ließ man zunächst auf Raumtemperatur kommen und erhitzte dann 2,5 Stunden zum Rückfluß. Anschließend wurde abgekühlt. 10 ml Wasser wurden protionsweise zugegeben Dann wurde eine Stunde am Rückfluß gehalten. Dann wurde eine Mischung aus 10 ml Essigsäure und 1,5 ml Wasser zugesetzt und nachgerührt. Nach Kristallisation und Absaugen erhielt man 16,3 g (53 % d. Th.) Acetylaminomethanphosphonsäure mit einem Schmelzpunkt von 188-194 °C.

## Patentansprüche

1. Verfahren zur Herstellung von Verbindungen der Formel I, 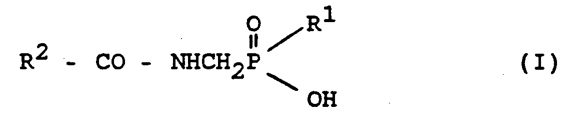 worin R¹ Hydroxy, C₁-C₄-Alkyl oder Phenyl und R² H, C₁-C₆-Alkyl, Benzyl oder Phenyl, das unsubstituiert oder durch ein oder mehrere Reste aus der Gruppe C₁-C₄-Alkyl, C₁-C₄-Alkoxy und Halogen substituiert ist, bedeuten, dadurch gekennzeichnet, daß man Verbindungen der Formel II,
R² - CO - NH - CH₂ - OH (II)
worin R² die obengenannte Bedeutung hat, mit Verbindungen der Formel III, 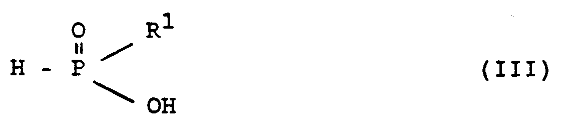 worin R¹ die obengenannte Bedeutung hat, in Gegenwart von mindestens äquimolarer Menge an Essigsäureanhydrid, bezogen auf die Verbindung der Formel II, umsetzt.

2. Verfahren nach Anspruch 1, dadurch gekennzeichnet, daß R¹ Hydroxy bedeutet.

3. Verfahren nach Anspruch 1, dadurch gekennzeichnet, daß R¹ Methyl, Ethyl oder Phenyl bedeutet.

4. Verfahren nach Anspruch 1, 2 oder 3, dadurch gekennzeichnet, daß R² H, C₁-C₃-Alkyl, Benzyl oder Phenyl bedeutet.

5. Verfahren nach Anspruch 1, 2 oder 3, dadurch gekennzeichnet, daß R² Phenyl bedeutet.

6. Verfahren nach einem oder mehreren der Ansprüche 1 bis 5, dadurch gekennzeichnet, daß die Verbindungen der Formeln II und III und Essigsäureanhydrid im Molverhältnis 1:1:1,5 bis 1:(1-1,1):8 umgesetzt werden.

7. Verfahren nach Anspruch 6, dadurch gekennzeichnet, daß das Molverhältnis von 1:1:1,5 bis 1:1:4 beträgt.

8. Verfahren nach Anspruch 6 oder 7, dadurch gekennzeichnet, daß nach beendeter Umsetzung überschüssiges Essigsäureanhydrid hydrolysiert wird.

9. Verfahren nach einem der Ansprüche 1 bis 7, dadurch gekennzeichnet, daß die Umsetzung der Verbindungen der Formeln II und III in Gegenwart eines organischen Lösungsmittels durchgeführt wird.

10. Verfahren nach Anspruch 9, dadurch gekennzeichnet, daß das Lösungsmittel Essigsäure ist.

11. Verbindungen der Formel (I) 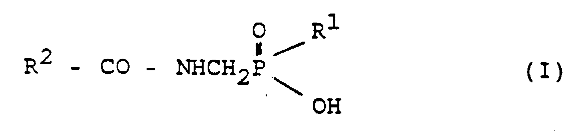 worin R¹ Phenyl und R² H, C₁-C₆-Alkyl, Benzyl oder Phenyl, das unsubstituiert oder durch ein oder mehrere Reste aus der Gruppe C₁-C₄-Alkyl, C₁-C₄-Alkoxy und Halogen substituiert ist, bedeuten.

12. Verbindungen nach Anspruch 11, dadurch gekennzeichnet, daß R¹ Phenyl und R² H, Methyl oder Phenyl bedeutet.

13. Verwendung von Verbindungen nach Anspruch 11 oder 12 zur Herstellung von Aminomethylphosphinsäuren der Formel H₂NCH₂P(O)(R¹)(OH).

## Claims

1. A process for the preparation of compounds of the formula I 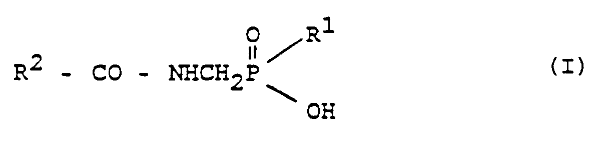 in which R¹ is hydroxyl, C₁-C₄-alkyl or phenyl and R² is H, C₁-C₆-alkyl, benzyl or phenyl, unsubstituted or substituted by one or more radicals from the group comprising C₁-C₄-alkyl, C₁-C₄-alkoxy and halogen, which comprises reacting compounds of the formula II
R² - CO - NH - CH₂ - OH (II)
in which R² has the abovementioned meaning, with compounds of the formula III 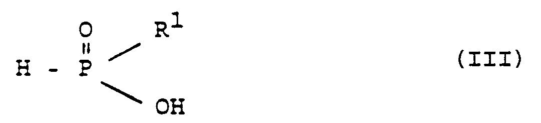 in which R¹ has the abovementioned meaning, in the presence of an at least equimolar amount of acetic anhydride, based on the compound of the formula II.

2. The process as claimed in claim 1, wherein R¹ is hydroxyl.

3. The process as claimed in claim 1, wherein R¹ is methyl, ethyl or phenyl.

4. The process as claimed in claim 1, 2 or 3, wherein R² is H, C₁-C₃-alkyl, benzyl or phenyl.

5. The process as claimed in claim 1, 2 or 3, wherein R² is phenyl.

6. The process as claimed in one or more of claims 1 to 5, wherein the compounds of the formulae II and III and acetic anhydride are reacted in a molar ratio of 1:1:1.5 to 1:(1-1.1):8.

7. The process as claimed in claim 6, wherein the molar ratio is from 1:1:1.5 to 1:1:4.

8. The process as claimed in claim 6 or 7, wherein excess acetic anhydride is hydrolyzed when the reaction is complete.

9. The process as claimed in one of claims 1 to 7, wherein the reaction of the compounds of the formulae II and III is carried out in the presence of an organic solvent.

10. The process as claimed in claim 9, wherein the solvent is acetic acid.

11. A compound of the formula (I) 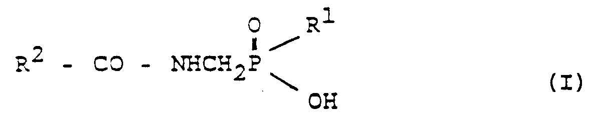 in which R¹ is phenyl and R² is H, C₁-C₆-alkyl, benzyl or phenyl, unsubstituted or substituted by one or more radicals from the group comprising C₁-C₄-alkyl, C₁-C₄-alkoxy and halogen.

12. A compound as claimed in claim 11, wherein R¹ is phenyl and R² is H, methyl or phenyl.

13. The use of a compound as claimed in claim 11 or 12 for the preparation of aminomethylphosphinic acids of the formula H₂NCH₂P(O)(R¹)(OH).

## Revendications

1. Procédé de préparation de composés de formule I 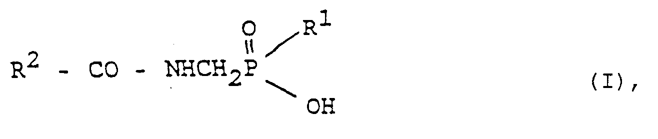 dans laquelle R¹ signifie un hydroxy, un alkyle en C₁-C₄ ou un phényle et R² signifie un H, un alkyle en C₁-C₆, un benzyle ou un phényle, qui est non-substitué ou est substitué par un ou plusieurs restes choisis parmi le groupe des alkyle en C₁-C₄, alcoxy en C₁-C₄ et halogène, caractérisé en ce qu'on fait réagir des composés de formule II
R² - CO - NH - CH₂ - OH (II),
dans laquelle R² a la signification donnée ci-dessus, avec des composés de formule III 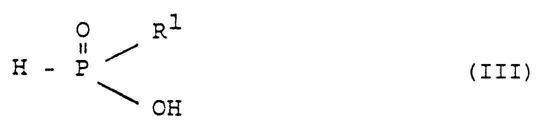 dans laquelle R¹ a la signification donnée ci-dessus, en présence d'une quantité au moins équimoléculaire en anhydride de l'acide acétique, par rapport au composé de formule II.

2. Procédé selon la revendication 1, caractérisé en ce que R¹ signifie un hydroxy.

3. Procédé selon la revendication 1, caractérisé en ce que R¹ signifie un méthyle, un éthyle ou un phényle.

4. Procédé selon la revendication 1, 2 ou 3, caractérisé en ce que R² signifie un H, un alkyle en C₁-C₃, un benzyle ou un phényle.

5. Procédé selon la revendication 1, 2 ou 3, caractérisé en ce que R² signifie un phényle.

6. Procédé selon une ou plusieurs des revendications 1 à 5, caractérisé en ce qu'on fait réagir les composés de formules II et III et de l'anhydride de l'acide acétique dans des rapports molaires allant de 1:1:1,5 à 1:(1-1,1):8.

7. Procédé selon la revendication 6, caractérisé en ce que le rapport molaire est compris entre 1:1:1,5 et 1:1:4.

8. Procédé selon la revendication 6 ou 7, caractérisé en ce qu'on hydrolyse à la fin de la réaction l'anhydride de l'acide acétique en excès.

9. Procédé selon l'une des revendications 1 à 7, caractérisé en ce qu'on réalise la réaction des composés de formules II et III en présence d'un solvant organique.

10. Procédé selon la revendication 9, caractérisé en ce que le solvant est l'acide acétique.

11. Composés de formule (I) 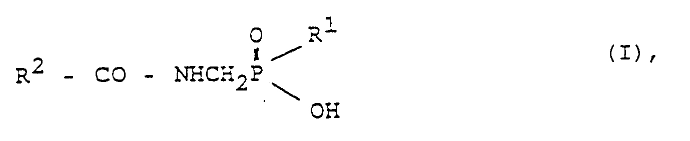 dans laquelle R¹ signifie un phényle et R² signifie un H, un alkyle en C₁-C₆, un benzyle ou un phényle, qui est non-substitué ou est substitué par un ou plusieurs restes choisis parmi le groupe des alkyle en C₁-C₄, alcoxy en C₁-C₄ et halogène.

12. Composés selon la revendication 11, caractérisés en ce que R¹ signifie un phényle et R² signifie un H, un méthyle ou un phényle.

13. Utilisation des composés selon la revendication 11 ou 12, pour la préparation d'acides aminométhylphosphiniques de formule H₂NCH₂P(O)(R¹)(OH).
